(19) Europäisches Patentamt

European Patent Office

Office européen des brevets

(11) **EP 1 178 396 A1**

(12) **EUROPEAN PATENT APPLICATION**

(43) Date of publication:
06.02.2002 Bulletin 2002/06

(51) Int Cl.$^7$: **G06F 5/01**, G06F 7/00

(21) Application number: 00410089.7

(22) Date of filing: 01.08.2000

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **STMicroelectronics S.A.**<br>**92120 Montrouge (FR)** | (72) Inventor: **Ferroussat, Sébastien**<br>**38600 Fontaine (FR)**<br><br>(74) Representative: **Style, Kelda Camilla Karen et al**<br>**Page White & Farrer, 54 Doughty Street**<br>**London WC1N 2LS (GB)** |

(54) **Apparatus and method for the normalisation of data**

(57) A method for determining a common shift value to be applied to a plurality of data for global normalization, said plurality of data comprising first and second types of data, said first type being identified by a transition from a first value to a second value and said second type being identified by a transition from the second value to the first value, said method comprising the steps of translating said data to a form in which a transition in said first type and the second type of data is represented by the same transition in the respective translated data; and using said translated data to determine a common shift value.

**Description**

The present invention relates to an apparatus and a method for the normalisation of data and in particular but not exclusively to the normalisation of a set of data.

In mathematical units, a set of data is often stored. The data may be stored in an array or a table. It is sometimes necessary to normalise all of the set of data in a global operation. In an individual normalisation process, each value will be separately normalised. In a global normalisation process, all of the pieces of data will be dealt with in the same way. In order to determine what happens to each piece of data, the following process is carried out. Firstly the maximum number of bits that each piece of data can be left shifted in an individual normalisation process is determined. The minimum of these maximum number of bits is determined. That minimum number of bits is the number of bits by which each value in the set of data is shifted. This number is the common shift value. In this way, when the global normalisation operation has been completed no piece of data overflows the data format. This means that if each piece of data is expressed by n bits, after normalisation each bit of data can still be expressed by n bits. At the end of the process at least one piece of data is properly normalised.

In one example, floating point data is made up of a significand and an exponent. In pseudo floating point calculations, a set of the significands use the same exponent value. Global normalisation will result in each significand being shifted by the minimum number of bits with at least one significand being properly normalised. The value of the minimum number of bits is subtracted from the common exponent.

To explain the purpose of normalisation, suppose there are 8 digits to represent the significand and 2 digits for the exponent. In this example, the data is decimal data. 0.000000123456789E25 expressed, in this format without normalising gives 0.0000001E25. However a large part of the value is lost. Expressing this number, normalised, in the format described hereinbefore gives 1.234567E18. Normalisation allows the maximum precision of floating (or pseudo floating) data to be obtained by removing the nonsignificant digits at the left of the significand.

Table 1 shows how a typical set of data is normalised globally in the prior art.

TABLE 1

| OPERANDS | PRIOR OPERAND | OPERANDS AFTER NORMALISATION |
|---|---|---|
| 00000010 | 5 | 00001000 |
| 00010001 | 2 | 01000100 |
| 11110010 | 3 | 11001000 |

The first column represents the data to be globally normalised. The numbers are in 2's complement arithmetic and accordingly the first and second numbers are positive numbers and the third number is a negative number. The first number can be left shifted by 5 bits so that there is only one "0" before the first "1". Likewise the second number can be left shifted by two bits. As the third number is a negative number, it can be left shifted by three bits so that there is only one "1" before the first "0". The maximum number by which each operand can be shifted is in the second column.

The minimum of 5, 3 and 2 is 2 so each piece of data is shifted by 2 bits to the left as shown in the third column of Table 1. This method has the disadvantage that it is time consuming and requires at least 2N instructions in order to determine the common shift value, ie the minimum value. N is the number of operands in a table. N instructions are required to determine the maximum number of bits by which each value can be shifted and N instructions are required to determine the minimum value.

In most implementations, the "minimum" instruction is not usually present in the instruction set of high frequency processors and must therefore be synthesised. This means that in practice, the number of instructions required may be at least 3N. This means that the global normalisation process is relatively slow and uses up processing resources unnecessarily.

If all the significands are positive, it is possible to use a faster process. An OR summation is performed on all the significands.

The number of bits that the result of the summation has to be left shifted in order to be normalised is then determined and that value is used as the common shift value for all the data of the set. This method only requires N+1 instructions to find the common shift value for the set of data: N instructions for the OR summation, and one to perform a prior instruction on the result of the summation. The prior instruction is the instruction giving the number of bits signed data expressed in 2's complement arithmetic has to be left shifted to be normalized. This method is illustrated in relation to Table 2. The data in this table are signed data expressed in 2's complement arithmetic.

Table 2

| Operands | 'or' sum (operand) | Operands after global normalization |
|----------|--------------------|--------------------------------------|
| 00000010 | 00000010 | 00000100 |
| 00010001 | 00010011 | 00100010 |
| 00110010 | 00110011 | 01100100 (norm$^{ed}$) |

The first column represents the values to be normalised. The second column represents the result of an OR operation between the current operand and the previous OR operation. The third column represents the values after global normalisation.

The value 00110011 which is the final result of the OR summation has a normalisation value of 1 which is used as the common shift value.

In a similar manner, if all the significands are negative, an AND operation is performed instead of the OR operation.

These two latter methods have the problem that in both cases the significands need to have the same sign in order to be used.

It is an aim of embodiments of the present invention to provide a method and apparatus which addresses the problems of the known methods.

According to one aspect of the present invention, there is provided a method for determining a common shift value to be applied to a plurality of data for normalization, said plurality of data comprising first and second types of data, said first type being identified by a transition from a first value to a second value and said second type being identified by a transition from the second value to the first value, said method comprising the steps of translating said data to a form in which a transition in said first type and the second type of data is represented by the same transition in the respective translated data; and using said translated data to determine a common shift value.

Preferably, the translating and using steps comprise carrying out the same one of the following instructions for each data of a set of data: $Rx_{new}=Rx_{old}$ OR (Rn XOR(Rn >>1)); $Rx_{new}=Rx_{old}$ AND (Rn XNOR (Rn>>1)); $Rx_{new}=Rx_{old}$ OR (Rn XOR (Rn<<1)) and $Rx_{new}=Rx_{old}$ AND (Rn XNOR (Rn<<1)) where $R_{old}$ is a result of the instruction carried out on a preceding data, Rn is the current data, Rn>>1 is the current data shifted one bit to the right and Rn<<1 is the current data shifted one bit to the left.

The common shift value may be determined from the value of $Rx_{new}$ for the last one of said data by determining the normalisation value for that $Rx_{new}$. Alternatively, the common shift value may be determined by carrying out on the value of $Rx_{new}$ for the last one of said data a leading one or a leading zero count depending on the instruction used.

The translating step may comprise performing a logic function with each of said plurality of data and a modified version of the respective data.

The modified version of the data value may be the data value shifted by one bit in a predetermined direction. The predetermined direction may be the left or the right direction.

In alternative embodiments of the invention, the data value may be shifted by two or more bits in a predetermined direction. In this embodiment, the logic function may be performed between two differently modified versions of the same data.

The logic function may comprise an exclusive OR function or a exclusive NOR function.

The using step may comprise carrying out a second logic function with the results of the first logic function and a value which takes into account other of the data values. The value which takes into account other of the data values may initially have a reset or initialisation value. The value which takes into account other of the data is the result of the second logic function carried out in respect of the preceding data.

The common shift value may be determined from the result of the second logic function performed in respect of the last of said data. The second logic function may be an AND function or an OR function.

The same transition may be at the same location in each of the translated data as the corresponding transition in the data values before translation. This is applicable for example when using an instruction in which a XOR (or XNOR) operation is performed between the data and a 1-bit right shifted version of the data.

The first and second types of values may be identified by a first respective transition occurring in the data when starting from the most significant bit. The first and second types of data may be positive and negative respectively.

One of the first and second values is one and the other of the first and second values is zero.

Embodiments of the present invention also provide a method for globally normalising a plurality of data, comprising the method as described hereinbefore in order to determine the common shift value to be used in the global normalisation and applying the common shift value to the plurality of data values in order to normalise the values globally.

According to a second aspect of the present invention, there is provided an apparatus for determining a common shift value to be applied to a plurality of data, said plurality of data comprising first and second types of data, said first type being identified by a transition from a first value to a second value and said second type being identified by a transition from the second value to the first value, said apparatus comprising means for translating said data to a form in which a transition in said first type and in said second type is represented by the same transition in the respective translated values; and means for using said translated values to determine a common shift value.

In preferred embodiments of the invention the numbers are binary numbers in 2's complement arithmetic. So, with positive data, the most significant bit is indicated by the first transition from the 0 to the 1. With negative data, the most significant bit is indicated by the first transition from the 1 to the 0.

For a better understanding of the present invention and as to how the same may be carried into effect, reference will now be made by way of example to the accompanying drawing in which:

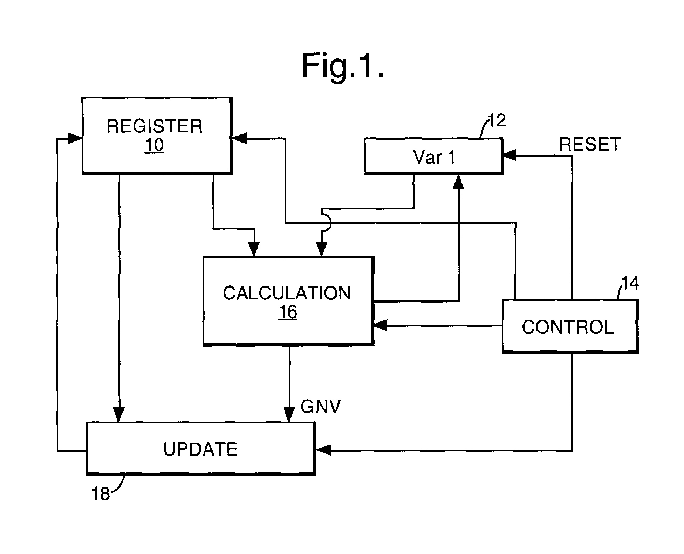

Figure 1 shows a block diagram of an embodiment of the present invention.

Reference will now be to Figure 1 which shows a system in which embodiments of the present invention may be incorporated.

With positive data, the most significant bit is indicated by the first transition from 0 to 1. With negative data, the most significant bit is indicated by the first transition from the 1 to the 0. The numbers used in the described embodiments are binary numbers expressed in 2's complement arithmetic. If the most significant bit is 0, the number is positive and if the most significant bit is 1, the number is negative.

In embodiments of the present invention, the operand is converted before summation into a representation where transitions from 0 to 1 or from 1 to 0 are converted into the same transition. In the example described the transition is 0 to 1. In other embodiments of the present invention, the transition may be from 1 to 0.

The method embodying the present invention uses the following:

Rx XOR (Rx>>1) where Rx>>1 is Rx one bit right shifted. The 1-bit right shift is a signed shift, that is to say if the data is negative, a 1 is inserted at the left side of the data and if the data is positive, a 0 is inserted at the left side of the value. XOR is the exclusive OR operation. Rx is the data to be normalised.

Consider the following example where Rx is a positive value.

R1 = 00001001

The prior value is 3.

```
R1          00001001


R1 >>1      00000100
XOR         00001101
```

The data is modified but the prior or normalisation value is still 3.

Consider an example where Rx is a negative value. In the following example the prior value is 4.

```
R1          11111001
R1>>1       11111100
XOR         00000101
```

The data resulting from the XOR operation is positive but the prior value is still 4.

The following instruction is used in embodiments of the invention to normalise a set of data as will be illustrated hereinafter. This instruction is referred to as an "edges" instruction. $Rx_{new}=Rx_{old}$ OR (Rn XOR (Rn>>1)) where Rx is the accumulator value; Rn is the current value Rn>>1 indicates that Rn has been right shifted by one bit.

Thus the operation Rx XOR (Rx>>1) translates data with a positive edge (0 to 1) or a negative (1 to 0) edge to one with a positive edge at the same place.

Consider the following table, table 3, where the values R1, R2 and R3 are to be normalised. In the example, the data is 8 bits wide but embodiments of the invention can be used with any size of data.

TABLE 3

| DATA | VALUE |
|------|-------|
| R1 | 00000010 |
| R2 | 11100001 |
| R3 | 11111010 |
| | |
| GLOBAL NORMALISATION VALUE | MIN (5,2,4)=2 |

Var1 will contain the partial results and is thus $Rx_{old}$. It is initialised to the following: Var1= 00000000. The next step Var1 is defined as follows:

Var1 = Var1 OR (XOR_RES1) where XOR_RES1=R1 XOR (R1>>1)
R1 XOR (R1>>1) is as follows

```
R1          00000010
R1>>1       00000001
XOR_RES1    00000011
```

Var1 = Var1 OR (XOR_RES1)

```
Var1        00000000
XOR_RES1    00000011
Var1        00000011
```

This new Var1 is then used in the processing of the subsequent values. For R2, Var1= Var1 OR (XOR_RES2) where XOR_RES2=R2 XOR (R2>>1)

R2 XOR (R2>>1) is as follows

```
R2          11100001
R2>>1       11110000
XOR_RES2    00010001
```

New Var1 = Var1 or (XOR_RES2)

```
Var1        00000011
XOR_RES2    00010001
Var1        00010011
```

The next value R3 in the table is processed in exactly the same way.

R3 XOR (R3>>1) is as follows:

**5**

```
R3          11111010
R3>>1       11111101
XOR_RES3    00000111
```

Var1 = Var1 or (XOR_RES3)

```
Var1        00010011
XOR_RES3    00000111
Var1=       00010111
```

prior (Var1) = 2= common shift value

In other words, after processing all three values, it can be seen that the common shift value is the same as with the conventional methods.

Figure 1 shows a block diagram of an arrangement for implementing this embodiment.

A register 10 stores a set of values which are to be normalised globally. A buffer 12 stores the current value of Var1. The value in the buffer 12 storing the value of Var1 is initialised by a reset signal from a control unit 14. The initialised value is 00000000. Control signals are also applied by the control unit to the buffer 12.

The control unit 14 also applies control signals to the register 10 to control which value is to be read out. When the common shift value is being determined, successive values Rx are read out to a calculation unit 16 under the control of control unit 14. The calculation unit 16 also receives the current value of Var1 from the buffer 12. The calculation unit 16 calculates the new value of Var1 from the currently received result Rx from the register 10 and writes that new value back into the buffer 12. This process continues until all of the values Rn have been processed by the calculation unit 16. The calculation unit 16 calculates the value of Var1 in the manner described hereinbefore. From the final value of Var1, the common shift value is determined.

The common shift value is read out to the update unit 18. The update unit 18 uses the common shift value determined by the calculation unit 16 to update the values in the register 10. The update unit 18 is, as is the register 10, under the control of control unit 14. Each value is read out of the register 10 in turn. The value is normalised by the update unit in accordance with the common shift value and is then written back into the same location in register 10.

As with the prior art, the common shift value determines the number of bits by which each value is shifted to the left.

The update unit 18 may update the values sequentially or all at the same time. It is preferred that the values be updated sequentially. The buffer 12 may form part of the calculation unit 16.

The arrangement of Figure 1, may but not necessarily be included in an integrated circuit.

In an alternative embodiment of the present invention, data with a positive or a negative edge is translated to one with a negative edge at the same place. To achieve this, the operation which is performed is the exclusive NOR (XNOR) operation which is carried out instead of the exclusive OR operation. Instead of the OR operation, an AND operation is then carried out. This can be represented as $Rx_{new}=Rx_{old}$ AND (Rn XNOR (Rn>>1)) using the same notation as before. Rn>>1 indicates that Rn has been shifted one bit to the right.

With this instruction, the value of the common shift value is calculated in the same way as described in the previous embodiment.

In one variation, the following instruction is performed: $Rx_{new}=Rx_{old}$ OR (Rn XOR(Rn<<1)) where Rn<<1 represents Rn when shifted one bit to the left. This instruction is carried out for each of the data in the set of data with $Rx_{new}$ becoming $Rx_{old}$ for the next piece of data. The final value of $Rx_{new}$ is used to perform a leading zero detection on the result. This leading zero detection counts the numbers of consecutive zeros in the operand starting from the left before encountering the first "one". This provides the common shift value.

A further alternative instruction which can be used is $Rx_{new}=Rx_{old}$ AND (Rn XNOR(Rn<<1)). Again, this instruction is carried out for each data value with $Rx_{new}$ of the previous instruction becoming $Rx_{old}$. Once these instructions have been completed on the entire set of data, the value of $Rx_{new}$ for the last piece of data has a leading one detection performed thereon. This leading one detection instruction counts the number of "1"s in the operand, starting from the left before meeting the first zero. This value determines the common shift value.

Embodiments of the present invention can be implemented on reduced instructions set computers or complex instruction set computers (RISC or CISC). In the case of a RISC processor, separate registers are provided for $Rx_{old}$, $Rx_{new}$ and Rn. The registers are part of the processor. Data to be normalised are stored in a memory outside the core of the RISC processor. An instruction transfers data from the memory into a register. Then the data is subjected to the edges instruction. The result is stored in a register. If the result has to be written back to the external memory, this is controlled by a third instruction.

In CISC processors, registers are provided in the processors but the instructions allow operations to be performed directly using data from the external memory. Thus, the data from the external memory, can directly be used for a calculation, without being primarily stored in a register. Data fetched from the external memory is represented by: [address]. "address" is the address in the external memory from which the data is fetched. The brackets mean that the data contained at this address is taken. So, the instruction could be rewritten for a CISC processor as:

$Rx_{new} = Rx_{old}$ OR ($[address_n]$XOR($[address_n]$>>1))

$Rx_{new}$ and $Rx_{old}$ may also be replaced by memory locations.

Embodiments of the present invention can be provided by a succession of instructions in a program which is managed by the programmer of the processor. Alternatively, embodiments of the invention can be implemented directly in a single instruction. In the latter case, the device embodying the present invention will automatically generate the sequence of basic instructions required to provide the common shift value. In either case, the same sequence can be performed. In the former case, the succession of instructions is handled by the programmer and in the latter case a series of instructions is handled by the processor.

Embodiments of the present invention can also be implemented where there is more than a one bit shift to the left or the right. However, this would require the second operand of the XOR or XNOR functions to be shifted. The relative shift between the two values which are XORed or XNORed is kept as one. For example Rn>>1 may be XORed with Rn>>2 where Rn>>2 is Rn shifted by 2 bits.

In this way, the number of instructions which need to be carried out in respect of a table containing positive and negative values may be reduced as compared to the prior art.

It should be appreciated that embodiments of the present invention can be used for pseudo floating point calculations.

The embodiment of the present invention has been described in the context of a binary system. Embodiments of the present invention have been described in the context of a system using 2's complement arithmetic.

**Claims**

1. A method for determining a common shift value to be applied to a plurality of data for global normalization, said plurality of data comprising first and second types of data, said first type being identified by a transition from a first value to a second value and said second type being identified by a transition from the second value to the first value, said method comprising the steps of:

    translating said data to a form in which a transition in said first type and the second type of data is represented by the same transition in the respective translated data; and
    using said translated data to determine a common shift value.

2. A method as claimed in claim 1, wherein said translating and using steps comprise carrying out the following instruction for each data:
    $Rx_{new}=Rx_{old}$ OR (Rn XOR(Rn >>1)) where $Rx_{old}$ is the result of the instruction carried out on preceding data, Rn is the current data and Rn>>1 is the current data shifted one bit to the right.

3. A method as claimed in claim 1, wherein said translating and using steps comprise carrying out the following instruction for each data:
    $Rx_{new}=Rx_{old}$ AND (Rn XNOR (Rn>>1)) where $Rx_{old}$ is the result of the instruction carried out on preceding data, Rn is the current data and Rn>>1 is the current data shifted one bit to the right.

4. A method as claimed in claim 1, wherein said translating and using steps comprise carrying out the following instruction for each data:
    $Rx_{new}=Rx_{old}$ OR (Rn XOR (Rn<<1)) where $Rx_{old}$ is a result of the instruction carried out on a preceding data, Rn is the current data and Rn <<1 is the current data shift one bit to the left.

5. A method as claimed in claim 1, wherein said translating and using steps comprise carrying out the following instruction for each data:

$Rx_{new}=Rx_{old}$ AND (Rn XNOR (Rn<<1)) where $Rx_{old}$ is a result of the instruction carried out on a preceding data, Rn is the current data and Rn <<1 is the current data shift one bit to the left.

6. A method as claimed in claim 2, 3, 4 or 5, wherein said common shift value is determined from the value of $Rx_{new}$ for the last one of said data by determining the normalization value for that $Rx_{new}$.

7. A method as claimed in any preceding claim, wherein the first and second types of data are positive and negative data.

8. A method for globally normalising a plurality of data, comprising using the method claimed in any preceding claim in order to determine a common shift value to be used in the global normalisation and applying the determined value to said plurality of data values in order to normalise said values globally.

9. A processor for carrying out the method claimed in claim 8 when appended to any of claims 2 to 5, wherein a single instruction is provided to said processor, said single instruction resulting in the generation by said processor of a sequence of instructions so that said instruction carried out in respect of each data is carried out and the common shift value is determined.

10. A processor for carrying out the method claimed in claim 8 when appended to any of claims 2 to 5, wherein said processor is provided with a succession of instructions, said instructions comprising the instructions carried out in respect of each data and an instruction to determine the common shift value.

11. A RISC processor for carrying out the method as claimed in any of claims 2 to 6 or any claim appended thereto, wherein register locations are provided for storing $Rx_{old}$, $Rx_{new}$ and Rn.

12. A CISC processor for carrying out the method as claimed in any of claims 2 to 6 or any claim appended thereto, wherein external memory locations are provided for storing at least one of $Rx_{old}$, $Rx_{new}$ and Rn.

13. An apparatus for determining a common shift value to be applied to a plurality of data, said plurality of data comprising first and second types of data, said first type being identified by a transition from a first value to a second value and said second type being identified by a transition from the second value to the first value, said apparatus comprising:

means for translating said data to a form in which a transition in said first type and in said second type is represented by the same transition in the respective translated values; and
means for using said translated values to determine a common shift value.

# Fig.1.

| European Patent Office | EUROPEAN SEARCH REPORT | Application Number EP 00 41 0089 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | "32-bit Cascadable Barrel Shifter" 26 March 1999 (1999-03-26) , LOGIC DEVICES INCORPRATED XP002158443 Retrieved from the Internet: <URL: http://www.logicdevices.com/products/lsh32 .htm> 'retrieved on 2001-01-24! * page 2, column 3, paragraph 3 - page 3, column 3, paragraph 1 * * page 5, paragraph 3 * | 1-13 | G06F5/01 G06F7/00 |
| Y | US 3 831 012 A (TATE D ET AL) 20 August 1974 (1974-08-20) * abstract * * column 1, line 60 - line 66 * * column 3, line 14 - line 16 * | 1-13 | |
| A | KOBAYASHI ET AL: "A Hierarchical Block-Floating-Point Arithmetic" JOURNAL OF VLSI SIGNAL PROCESSING SYSTEMS FOR SIGNAL. IMAGE, AND VIDEO TECHNOLOGY., 'Online! vol. 24, no. 1, February 2000 (2000-02), pages 19-30, XP002158442 KLUWER ACADEMIC PUBLISHERS, DORDRECHT., NL ISSN: 0922-5773 Retrieved from the Internet: <URL:http://www.wkap.nl/sample.pdf?253262> 'retrieved on 2001-01-24! * paragraph '02.2! * * paragraph '0004! * | 1-13 | TECHNICAL FIELDS SEARCHED (Int.Cl.7) G06F |
| A | PATENT ABSTRACTS OF JAPAN vol. 1997, no. 09, 30 September 1997 (1997-09-30) & JP 09 128213 A (HITACHI LTD), 16 May 1997 (1997-05-16) * abstract * | 1-13 | |

-/--

The present search report has been drawn up for all claims

| Place of search | Date of completion of the search | Examiner |
|---|---|---|
| THE HAGUE | 25 January 2001 | Cohen, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**European Patent Office**

**EUROPEAN SEARCH REPORT**

Application Number

EP 00 41 0089

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | PATENT ABSTRACTS OF JAPAN vol. 1995, no. 05, 30 June 1995 (1995-06-30) & JP 07 036665 A (MATSUSHITA ELECTRIC IND CO LTD), 7 February 1995 (1995-02-07) * abstract * | 1-13 | |
| | | | **TECHNICAL FIELDS SEARCHED (Int.Cl.7)** |

The present search report has been drawn up for all claims

| Place of search | Date of completion of the search | Examiner |
|---|---|---|
| THE HAGUE | 25 January 2001 | Cohen, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**  EP 00 41 0089

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2001

| Patent document cited in search report | | Publication date | Patent family member(s) | | Publication date |
|---|---|---|---|---|---|
| US 3831012 | A | 20-08-1974 | AU | 6391973 A | 26-06-1975 |
| | | | CA | 1007379 A | 22-03-1977 |
| | | | DE | 2405858 A | 17-10-1974 |
| | | | FR | 2223749 A | 25-10-1974 |
| | | | GB | 1438307 A | 03-06-1976 |
| | | | JP | 49130640 A | 14-12-1974 |
| | | | NL | 7400331 A,B, | 01-10-1974 |
| JP 09128213 | A | 16-05-1997 | NONE | | |
| JP 07036665 | A | 07-02-1995 | NONE | | |

For more details about this annex : see Official Journal of the European Patent Office, No. 12/82